# FASCICULE DE BREVET EUROPEEN

(11) **EP 0 403 714 B1**
(45) Date de publication et mention de la délivrance du brevet: **12.01.1994**
(21) Numéro de dépôt: 89403067.5
(22) Date de dépôt: 07.11.1989
(51) Int. Cl.: H02K 49/04

(54) **Perfectionnements aux transmissions de véhicules équipées de ralentisseurs électriques**
Kraftfahrzeugantrieb mit elektrischen Bremsvorrichtungen
Vehicle transmission with electric retarders

(30) Priorité: 16.06.1989 FR 8908045
(43) Date de publication de la demande: 27.12.1990
(73) Titulaire: LABAVIA S.G.E., F-78180 Montigny le Bretonneux (FR)
(72) Inventeur: Rugraff, Guy, F-93500 Pantin (FR)
(74) Mandataire: Behaghel, Pierre

(56) Documents cités:
- EP-A- 0 282 375
- DE-A- 2 015 719
- GB-A- 2 122 035
- US-A- 4 128 147

## Description

L'invention est relative aux transmissions de véhicules, c'est-à-dire aux chaînes d'organes transmettant le mouvement de rotation du moteur aux roues du véhicule, organes comprenant une boîte de vitesses, un pont et un arbre à double cardan assurant le transfert des couples de la boîte au pont tout en permettant leurs déplacements transversaux relatifs.

Elle vise plus particulièrement, parmi ces transmissions, celles équipées d'un ralentisseur électrique à courants de Foucault propre à exercer sur elles un couple de freinage aux instants désirés, ledit ralentisseur étant monté directement sur le carter de la boîte de vitesses du véhicule et comprenant, d'une part, un stator inducteur annulaire monté en porte-à-faux sur le carter considéré à l'aide d'une ossature appropriée, et d'autre part, un rotor comportant deux disques induits en matériau ferromagnétique qui encadrent le stator et sont tous les deux supportés par une bride de boîte elle-même emmanchée en porte-à-faux sur un bout d'arbre intérieur au carter, chaque disque étant à cet effet solidarisé, par l'intermédiaire d'une couronne de bras formant ailettes de ventilation, avec une bague qui est à son tour fixée sur ladite bride, cette bride étant pourvue de deux couronnes d'éléments de fixation, dont la première est affectée à la fixation du joint à cardan contigu et la seconde, à la fixation des bagues des couronnes rotoriques.

Dans les modes de réalisation connus des transmissions du genre en question (voir le document GB-A-2 122 035), la pièce sur laquelle sont montées les deux bagues est en général un plateau intercalaire spécial qui est fixé, d'une part, sur la "bride de boîte" calée sur un bout d'arbre intérieur au carter de la boîte et, d'autre part, du côté axial opposé audit bout d'arbre, sur une bride terminale du joint à cardan contigu.

Il est à noter en effet qu'il n'est pas possible en pratique de monter directement les couronnes rotoriques sur la bride de boîte, car le montage d'au moins la couronne disposée du côté de la boîte devrait alors être effectué avant mise en place de la bride sur la boîte.

Or, cette mise en place est effectuée par un emmanchement axial dur de cannelures complémentaires comprises respectivement par le bout d'arbre intérieur à la boîte et par un manchon cylindrique prolongeant la bride : un tel emmanchement à force ne peut être exécuté qu'avec la bride non chargée.

Le plateau intercalaire spécial doit présenter une certaine épaisseur puisqu'il doit pouvoir transmettre la totalité des couples moteurs du véhicule du cardan à la bride de boîte.

De ce fait, il présente le double inconvénient d'un poids et d'un encombrement axial relativement élevés.

Ce dernier inconvénient peut se révéler sérieux dans le cas des transmissions très courtes, c'est-à-dire pour lesquelles on dispose d'un espace limité entre la sortie de la boîte et l'entrée du pont.

C'est en particulier le cas pour certains autobus modernes à moteur arrière, pour lesquels la longueur hors tout de l'ensemble moteur-boîte et celle du pont arrière, notamment du type hypoïde, augmentent sans que soient modifiés les emplacements respectifs de ces organes.

Dans un tel cas, il peut être vital de réduire de quelques centimètres l'allongement de la transmission dû au montage d'un ralentisseur électrique du genre ci-dessus sur elle, la possibilité d'adopter un tel ralentisseur étant parfois directement liée à une telle réduction.

L'invention a pour but, surtout, de rendre possible une réduction sensible de l'allongement indiqué, c'est-à-dire de raccourcir la distance axiale D entre le plan frontal de la boîte et le centre du cardan le plus proche, ce raccourcissement pouvant atteindre 120 et même 150 mm par rapport aux constructions connues pour un ralentisseur présentant un diamètre de l'ordre de 500 mm, la distance axiale D quant à elle, pouvant être réduite à moins de 200 mm et par exemple à 170 mm seulement.

A cet effet, les transmissions du genre en question selon l'invention sont essentiellement caractérisées en ce qu'il est prévu un intercalaire tubulaire s'étendant axialement à partir de la périphérie de la bride de boîte du côté opposé à la boîte et prolongé à une de ses extrémités axiales par une collerette intérieure, continue ou discontinue, appliquée jointivement en direction axiale contre la périphérie de la face, de la bride de boîte, la plus éloignée de la boîte, collerette perforée par une couronne de trous de fixation propres à coopérer avec les éléments de la deuxième couronne de la bride de boîte, et à son autre extrémité axiale par une collerette extérieure perforée par une couronne de trous pour la fixation axiale sur elle des bagues des couronnes rotoriques.

Dans des modes de réalisation intéressants, on a recours en outre à l'une et/ou à l'autre des dispositions suivantes :
- l'intercalaire tubulaire est prolongé, du côté de la bride de boîte, par un rebord cylindrique propre à coiffer jointivement cette bride,
- l'intercalaire tubulaire se termine, à son extrémité axiale opposée à la bride de boîte, par un prolongement cylindrique formant une portée de guidage intérieure pour la bague de la couronne rotorique la plus éloignée de la boîte,
- la face latérale extérieure de la portion médiane de l'intercalaire tubulaire forme une portée de guidage intérieure pour la bague de la couronne rotorique la plus proche de la boîte,
- la collerette intérieure est composée de quatre pattes perforées,
- dans une transmission selon l'alinéa précédent, la bride de boîte présente la forme générale d'une coupelle ouverte vers le joint à cardan contigu, la première couronne d'éléments de fixation comprend quatre trous filetés évidés respectivement dans les bras de deux fourches parallèles bordant la coupelle et destinées à recevoir deux tourillons du croisillon du joint à cardan et la seconde couronne d'éléments de fixation comprend quatre trous filetés évidés dans les deux extrémités des portions, du bord de la coupelle, qui relient entre elles les deux fourches, portions qui sont en retrait axialement par rapport à ces fourches et qui sont creusées radialement en leurs zones médianes de façon à permettre les débattements du joint à cardan autour de l'axe des deux tourillons ci-dessus,
- la bride de boîte est agrandie transversalement et la première couronne d'éléments de fixation présente un plus petit diamètre que la deuxième,
- dans une transmission selon l'alinéa précédent, l'épaisseur radiale de la portion cylindrique de l'intercalaire tubulaire est sensiblement constante sur toute son étendue et cette portion est renforcée intérieurement par des nervures radiales dont la hauteur va en décroissant depuis la collerette intérieure jusqu'à l'extrémité axiale opposée,
- les nervures selon l'alinéa précédent sont localisées à proximité des trous de fixation évidés dans la collerette intérieure, à raison de deux telles nervures encadrant chaque trou.

L'invention comprend, mises à part ces dispositions principales, certaines autres dispositions qui s'utilisent de préférence en même temps et dont il sera plus explicitement question ci-après.

Dans ce qui suit, l'on va décrire deux modes de réalisation de l'invention en se référant aux dessins ci-annexés d'une manière bien entendu non limitative.

La figure 1, de ces dessins, montre en coupe axiale une partie d'une transmission de véhicule, partie équipée d'un ralentisseur électrique conforme à l'invention.

Les figures 2 et 3 montrent à plus grande échelle, respectivement en coupe axiale selon II-II figure 3 et en vue en bout selon la flèche III de la figure 2, un intercalaire tubulaire faisant partie de la transmission ci-dessus, intercalaire établi selon l'invention.

La figure 4 montre semblablement à la figure 1 une variante également conforme à l'invention de la portion de transmission représentée sur cette figure 1.

Les figures 5 et 6 montrent à plus grande échelle et en vue en bout, respectivement, la bride de boîte de la transmission selon la figure 4 et une moitié de l'intercalaire tubulaire de cette transmission

Dans chaque cas, le ralentisseur électrique considéré est du type -connu sous la marque "FOCAL"- monté, avec un axe horizontal ou sensiblement horizontal, en porte-à-faux sur la sortie d un carter de boîte de vitesses 1.

Ce ralentisseur comprend un stator inducteur 2 et un rotor induit 3.

Le stator 2 comprend un flasque de forme sensiblement annulaire 4 qui porte une couronne de bobines 5 en nombre pair agencées de façon à former par leurs extrémités deux suites annulaires de pôles magnétiques plans à polarités alternées de proche en proche.

Le flasque 4 est monté sur le carter de boîte 1 -ou plus précisément sur une monture intermédiaire 6 elle-même rapportée contre la face frontale plane dudit carter 1- par l'intermédiaire d'une structure 7 en forme d'étoile ou de cloche ajourée et de cales tubulaires 8.

Le rotor 3 comprend quant à lui deux disques 9 en matériau ferromagnétique propres à encadrer axialement le stator et à défiler chacun en regard d'une suite de pôles de ce stator dont ils sont séparés par un faible jeu ou entrefer e.

Chaque disque 9 est relié à une bague de fixation 10 par une couronne de bras recourbés 11 formant ailettes de ventilation et les deux bagues 10 sont boulonnées à l'aide de systèmes boulons-écrous 12 sur un anneau intermédiaire 13 sur lequel on reviendra plus loin.

Le problème à résoudre est le montage de cet anneau 13 sur une "bride de boîte" 14 définie comme suit.

La portion centrale de la monture de boîte 6 présente la forme d'un nez cylindrique 15 portant, par l'intermédiaire d'un roulement terminal 16, un manchon 17 dont l'extrémité axiale extérieure est prolongée radialement par la bride 14 appelée dans le présent texte "bride de boîte".

L'autre extrémité axiale du manchon 17 est cannelée intérieurement en 18 et est emmanchée à force sur l'embout 19 de la boîte, cannelé extérieurement en 20.

Cet emmanchement est réalisé à force pour éviter toute création de jeu et il est ensuite maintenu par vissage axial dans l'embout 19 de vis 21 dont les têtes sont appliquées contre une plaque 22 prenant elle-même appui sur le manchon 17.

Comme indiqué ci-dessus, c'est sur la bride de boîte 14 ainsi définie que l'on se propose de monter l'anneau 13 ci-dessus.

Pour raccourcir au maximum la transmission en raison des impératifs exposés plus haut, les longueurs axiales du nez 15 et du manchon 17 sont relativement petites et la bride 14 s'étend à proximité de l'extrémité axiale dudit nez 15.

De ce fait, et comme les deux couronnes rotoriques 9-12 sont identiques et présentent donc le même encombrement, il n'y aurait pas suffisamment de place dans le creux annulaire de la structure 7 pour y loger la couronne la plus proche de la boîte si l'anneau était confondu avec la périphérie de la bride 14.

Une autre raison pour laquelle une telle solution ne peut être envisagée réside dans les exigences du montage par emmanchement à force, puisque, comme indiqué ci-dessus, il faudrait alors prévoir un montage de la couronne rotorique interne sur la bride avant le montage de cette bride sur la boîte.

C'est pour résoudre ces difficultés que l'on a généralement recours à un plateau intercalaire rapporté extérieurement sur la bride de boîte 14, la périphérie de ce plateau intercalaire constituant alors l'anneau 13.

Pour supprimer ce plateau intercalaire particulièrement lourd et encombrant, conformément à l'invention, on constitue l'anneau 13 par une extrémité, débordant radialement vers l'extérieur, d un intercalaire tubulaire 23 présentant en demi-coupe axiale la forme d'un Z étiré et l'on rapporte axialement l'autre extrémité 24, de cet intercalaire 23, débordant radialement vers l'intérieur sous la forme d'une collerette continue ou discontinue, contre la périphérie de la face, de la bride de boîte 14, la plus éloignée de la boîte.

Le recours à cet intercalaire tubulaire 23 présente simultanément les avantages suivants :
- l'anneau 13 demeure indépendant de la bride de boîte 14 pendant les premières phases du montage, ce qui permet de procéder sans entrave à l'emmanchement à force du manchon 17 terminé par ladite bride 14 sur l'extrémité cannelée de l'embout 19,
- le plateau intercalaire habituel est supprimé, ce qui permet de fixer directement une pièce 25 constitutive du joint à cardan contigu 36 contre la bride de boîte 14 en raccourcissant d'autant la transmission,
- l'anneau 13 est éloigné axialement de la boîte 1, ce qui permet de loger la couronne rotorique la plus proche de la boîte dans le creux annulaire de la structure 7,
- l'intercalaire tubulaire 23 peut être en outre extrêmement léger : en effet, cet intercalaire n'a plus à transmettre les couples moteurs du véhicule, mais uniquement ceux de ralentissement dont les plus importants ont une valeur en général dix fois moindre que les couples moteur maximum ; on peut donc donner à cette pièce une section relativement faible, la nervurer et l'épaissir localement dans ses portions les plus sollicitées, voire l'amincir localement si nécessaire,
- le logement en forme de pot défini par l'ensemble de la bride de boîte 14 et de l'intercalaire tubulaire 23 présente un relativement grand diamètre, ce qui rend possibles des débattements angulaires relativement importants pour l'arbre à cardan fixé sur ladite bride de boîte.

Concernant ce dernier avantage, il est à noter que le montage ici proposé est particulièrement intéressant lorsque le diamètre intérieur de l'intercalaire tubulaire 23 est grand, ce qui suppose de grands diamètres pour l'anneau 13, pour les bagues 10 et donc pour l'orifice évidé à l'intérieur de la couronne des pôles statoriques 5 : cette dernière condition est en particulier remplie en donnant au nombre pair de ces pôles une valeur supérieure à 8, et par exemple égale à 10, ainsi qu'enseigné par le brevet France n^{°} 2 577 357.

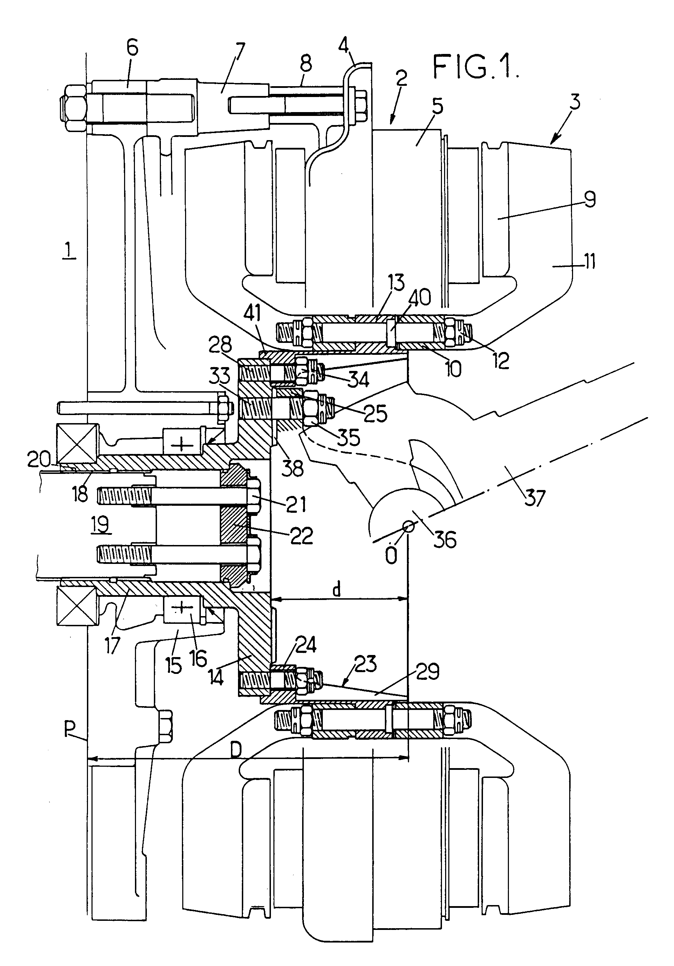

Le premier mode de réalisation qui a été illustré par les figures 1 à 3 correspond à un tel cas où le diamètre intérieur de l'intercalaire tubulaire peut être relativement grand.

Dans ce cas, la bride 14 présente la forme générale d'un disque plat, son diamètre est agrandi par rapport aux modes de réalisation habituels et c'est sur la périphérie agrandie de cette bride qu'est fixée la collerette 24.

L'intercalaire tubulaire 23 comprend une portion tubulaire centrale 26 d'épaisseur radiale constante sur toute son étendue et raccordée au voisinage de l'une de ses extrémités axiales à une collerette extérieure constitutive de l'anneau 13 et à son autre extrémité axiale à la collerette intérieure 24.

La portion de plus grand diamètre de la collerette intérieure 24 est prolongée axialement par un rebord cylindrique 41 propre à coiffer jointivement la périphérie de la bride de boîte 14, ce qui facilite le montage et le centrage mutuel de ces deux pièces.

Ladite collerette interne 24 est évidée par des trous de fixation 27 propres à être alignés avec des goujons de fixation 28 plantés dans la périphérie de la bride de boîte 14 et par exemple au nombre de 4.

La portion tubulaire 26 est renforcée intérieurement par des nervures radiales 29 qui sont par exemple localisées au voisinage des trous 27 à raison de deux nervures 29 encadrant chaque trou.

La hauteur radiale de ces nervures va en décroissant depuis la collerette interne 24 jusqu'à l'extrémité axiale opposée de l'intercalaire, ce qui donne à chaque nervure une forme générale triangulaire.

Cette forme est à la fois celle qui conduit au meilleur raidissement de l'intercalaire tubulaire pour un poids donné de métal et qui rend possibles les plus grands débattements angulaires pour l'arbre à cardans 37 comme bien visible sur la figure 1.

Le matériau constitutif de l'intercalaire est avantageusement une fonte sphéroïdale de qualité noble ou encore un acier ordinaire matricé.

Comme visible sur la figure 1, les têtes filetées des goujons 28 et 33 plantées dans la bride de boîte 14 et servant respectivement à assembler sur ladite bride de boîte l'intercalaire tubulaire 23 et la pièce 25 constitutive du joint de cardan -pièce qui est ici la bride terminale de ce joint- sont toutes facilement accessibles pour le vissage d'écrous de fixation 34 et 35 sur elles. Avec une telle construction, il est facile de monter sur la bride de boîte 14 et de démontrer indépendamment l'un de l'autre l'arbre 37 à double cardan et le rotor 3 du ralentisseur.

La collerette extérieure 13 est également évidée de trous de fixation 30, par exemple au nombre de 4, propres à recevoir les systèmes boulons-écrous 12. Cette collerette extérieure 13 est évidée axialement, dans l'une de ses faces transversales, par une gorge continue 39 dont les bords forment butées angulaires pour des carrés 40 appartenant aux systèmes boulons-écrous 12, et les portions, de l'autre face transversale de ladite collerette 13, situées entre les trous 30 sont évidées par des gorges en arcs de cercle 31.

La base de la collerette extérieure 13 est prolongée, sur sa face la plus éloignée de la boîte 1, par un rebord cylindrique 32 formant une portée de guidage interne pour la bague 10 de la couronne rotorique la plus éloignée de la boîte 1.

De même, la face extérieure de la portion 26 centrale de l'intercalaire tubulaire forme une portée de guidage interne pour la bague 10 de l'autre couronne rotorique.

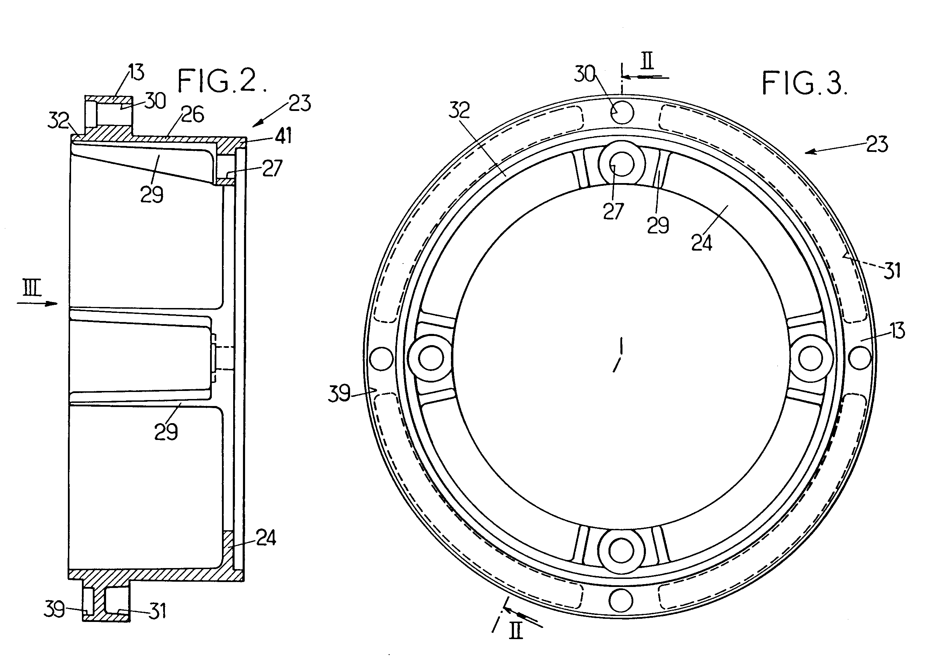

Comme on le voit sur la figure 2, les portions de la collerette interne 24 qui entourent les trous 27 sont un peu épaissies axialement.

On voit par ailleurs en 38 sur la figure 1 des dentures prévues respectivement sur les faces en regard de la bride de boîte 14 et de la bride de cardan 25 et servant au transfert des couples moteurs entre ces deux brides.

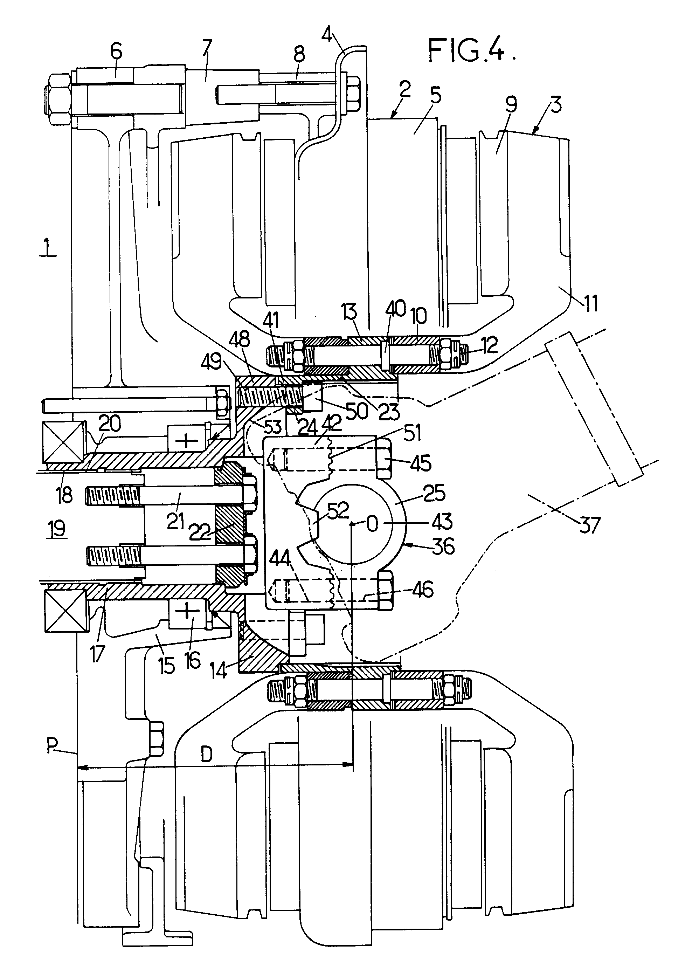

Dans le deuxième mode de réalisation illustré sur les figures 4 à 6, on retrouve la plupart des éléments du mode de réalisation précédent, qui sont affectés des mêmes références que précédemment.

Ce deuxième mode de réalisation diffère essentiellement du premier en ce que la bride de boîte 14 n'y est pas spécialement agrandie.

En effet le joint à cardan 36 à raccorder à la dite bride présente ici un encombrement transversal très petit, ce joint ne comprenant plus la bride terminale 25 précédente, laquelle formait bloc, d'une façon connue en soi, avec une paire de demi-mâchoires propres à recevoir deux des tourillons composant le croisillon du joint considéré.

Ici, cette bride terminale est confondue avec la bride de boîte 14.

Cette bride de boîte se présente sous la forme générale d'une coupelle ouverte vers le joint à cardan 36 et bordée par deux fourches parallèles 42 constituant les demi-mâchoires ci-dessus, c'est-à-dire destinées à recevoir deux tourillons du croisillon 43 du joint 36, fourches percées chacune de deux trous filetés 44.

La pièce 25 du cardan qui est fixée sur la bride de boîte 14 est ici constituée par deux pontets ou compléments de mâchoire destinés à former avec les fourches 42 les paliers de réception des tourillons ci-dessus en étant fixés sur ces fourches à l'aide de vis 45, lesquelles sont vissées dans les trous 44 après avoir traversé des trous appropriés 46 évidés dans lesdits pontets 25.

Le bord de la coupelle formant la bride 14 est complété par deux tronçons incurvés 47 disposés axialement en retrait par rapport aux fourches 42 et bordés chacun à leurs deux extrémités circonférentielles par deux bossages internes 48 évidés de trous filetés 49.

La collerette interne 24 comprise par l'intercalaire tubulaire 23 est ici discontinue et constituée par quatre pattes perforées des trous 27.

Ces trous 27 sont destinés à être alignés avec les trous filetés 49 pour la fixation des pattes 24 liées à l'intercalaire tubulaire sur les bossages 48 à l'aide de vis 50 vissées dans lesdits trous 49 après traversée desdits trous 27.

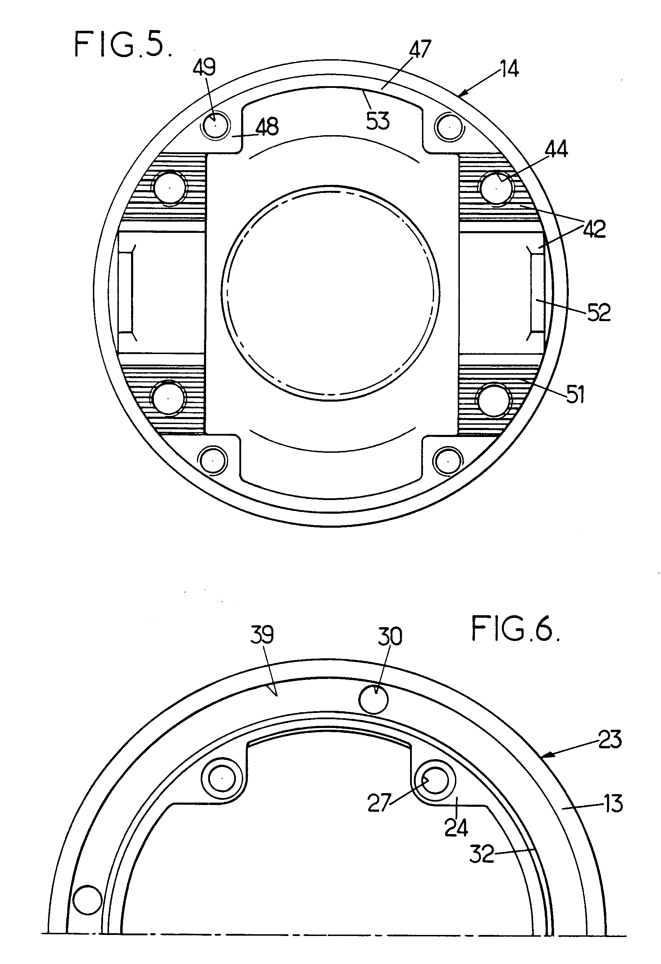

On voit encore sur les figures 4 et 5 :
- en 51 des dentures complémentaires prévues sur les portées en regard des pièces 25 et des fourches 42 pour assurer un bon transfert des couples moteurs entre les pièces respectivement en prise,
- en 52 des butées solidaires des fourches 42 et permettant de limiter certains débattements du tourillon 43,
- et en 53 des creux qui sont évidés radialement dans les deux tronçons incurvés 47, de faible hauteur axiale, bordant localement la coupelle 24, pour rendre possible les débattements angulaires de grande amplitude du joint à cardan 36 autour de l'axe commun aux deux tourillons reçus dans les fourches 42.

A titre purement illustratif et bien entendu non limitatif, on indique ci-après quelques cotes relatives à des modes de réalisation conformes aux dessins ayant donné toute satisfaction :
- distance D entre le plan frontal P d'application de la monture 6 sur la boîte 1 et le centre 0 du joint de cardan 36 le plus proche de la boîte : entre 170 et 205 mm,
- longueur axiale hors tout de l'intercalaire tubulaire 23 : entre 70 et 95 mm pour des diamètres intérieurs de la portion cylindrique de celui-ci compris respectivement entre 175 et 225 mm.

En suite de quoi, et quel que soit le mode de réalisation adopté, on dispose finalement d'une transmission de véhicule extrêmement courte bien qu'elle soit équipée d'un ralentisseur électrique du type "FOCAL".

## Revendications

1. Transmission de véhicule comprenant une boîte de vitesses (1), un pont, un arbre à double cardan (37) interposé entre ces deux organes et un ralentisseur électrique à courants de Foucault monté directement sur le carter de la boîte et comportant d'une part un stator inducteur annulaire (2) monté en porte-à-faux sur le carter considéré à l'aide d'une ossature appropriée (7), et d'autre part un rotor (3) comportant deux disques induits (9) en matériau ferromagnétique qui encadrent le stator et sont tous les deux supportés par une bride de boîte (14) elle-même emmanchée en porte-à-faux sur un bout d'arbre (19) intérieur au carter, chaque disque étant à cet effet solidarisé, par l'intermédiaire d'une couronne de bras (11) formant ailettes de ventilation, avec une bague (10) qui est à son tour fixée sur ladite bride, la bride de boîte (14) étant pourvue de deux couronnes d'éléments de fixation, dont la première (33,44) est affectée à la fixation du joint à cardan contigu (36), et la seconde (28,49), à la fixation des bagues (10) des couronnes rotoriques, caractérisé en ce qu'il est prévu un intercalaire tubulaire (23) s'étendant axialement à partir de la périphérie de la bride de boîte du côté opposé à la boîte (1) et prolongé à une de ses extrémités axiales par une collerette intérieure (24), continue ou discontinue, appliquée jointivement en direction axiale contre la périphérie de la face, de la bride de boîte, la plus éloignée de la boîte, collerette perforée par une couronne de trous de fixation (27) propres à coopérer avec les éléments de la deuxième couronne (28,49) de la bride de boîte et à son autre extrémité axiale par une collerette extérieure (13) perforée par une couronne de trous (30) pour la fixation axiale sur elle des bagues (10) ci-dessus.

2. Transmission de véhicule selon la revendication 1, caractérisée en ce que l'intercalaire tubulaire (23) est prolongé, du côté de la bride de boîte (14), par un second rebord cylindrique (35) propre à coiffer jointivement cette bride.

3. Transmission de véhicule selon l'une quelconque des revendications 1 et 2, caractérisée en ce que l'intercalaire tubulaire (23) se termine, à son extrémité axiale opposée à la bride de boîte (14), par un prolongement cylindrique (32) formant une portée de guidage intérieure pour la bague (10) de la couronne rotorique la plus éloignée de la boîte.

4. Transmission de véhicule selon l'une quelconque des revendications précédentes, caractérisée en ce que la face latérale extérieure de la portion médiane (26) de l'intercalaire tubulaire (23) forme une portée de guidage intérieure pour la bague (10) de la couronne rotorique la plus proche de la boîte.

5. Transmission de véhicule selon l'une quelconque des revendications précédentes, caractérisée en ce que la collerette intérieure (24) est composée de quatre pattes perforées.

6. Transmission de véhicule selon la revendication 5, caractérisée en ce que la bride de boîte (14) présente la forme générale d'une coupelle ouverte vers le joint à cardan contigu (36), en ce que la première couronne d'éléments de fixation comprend quatre trous filetés (44) évidés respectivement dans les bras de deux fourches parallèles (42) bordant la coupelle et destinées à recevoir deux tourillons du croisillon (43) du joint à cardan et en ce que la seconde couronne d'éléments de fixation comprend quatre trous filetés (49) évidés dans les deux extrémités des portions (47), du bord de la coupelle, qui relient entre elles les deux fourches, portions qui sont en retrait axialement par rapport à ces fourches et qui sont creusées radialement en leurs zones médianes (53) de façon à permettre les débattements du joint à cardan autour de l'axe des deux tourillons ci-dessus.

7. Transmission de véhicule selon l'une quelconque des revendications 1 à 4, caractérisée en ce que la bride de boîte (14) est agrandie transversalement et en ce que la première couronne d'éléments de fixation (33) présente un plus petit diamètre que la deuxième (28).

8. Transmission de véhicule selon la revendication 7, caractérisée en ce que l'épaisseur radiale de la portion cylindrique de l'intercalaire tubulaire (23) est sensiblement constante sur toute son étendue et en ce que cette portion est renforcée intérieurement par des nervures radiales (29) dont la hauteur va en décroissant depuis la collerette intérieure (24) jusqu'à l'extrémité axiale opposée.

9. Transmission de véhicule selon la revendication 8, caractérisée en ce que les nervures (29) sont localisées à proximité des trous de fixation (27) évidés dans la collerette intérieure (24), à raison de deux telles nervures encadrant chaque trou.

## Claims

1. Vehicle transmission comprising a gear-box (1), a rear axle, a double cardan shaft (37) interposed between these two members and an electric eddy current retarder mounted directly on the casing of the gear-box and comprising both an annular inductor stator (2) cantilevered on the casing considered by means of an appropriate frame (7) and a rotor (3) comprising two induced ferromagnetic material discs (9) which surround the stator and are both supported by a gear-box flange (14) itself cantilevered on a stub shaft (19) inside the casing, each disc being fixed for this purpose, by means of a crown of arms (11) forming ventilation fins, to a ring (10) which is in its turn fixed to said flange, the gear-box flange (14) being provided with two crowns of fixing elements, the first (33,44) of which serves for fixing the contiguous cardan joint (36) and the second (28,49) of which serves for fixing the rings (10) of the rotor crowns, characterized in that a tubular insert (23) is provided extending axially from the periphery of the gear-box flange on the side opposite the gear-box (1) and extended at one of its ends by an internal, continuous or discontinuous, collar (24) applied jointingly in an axial direction against the periphery of the face of the gear-box flange the furthest away from the gear-box, which collar is formed with a crown of fixing holes (27) adapted to cooperate with the elements of the second crown (28,49) of the gear-box flange and at its other axial end by an external collar (13) formed with a crown of holes (30) for axially fixing on it the above rings (10).

2. Vehicle transmission according to claim 1, characterized in that the tubular insert (23) is extended, on the gear-box flange (14) side, by a second cylindrical edge (35) adapted for jointingly covering this flange.

3. Vehicle transmission according to any one of claims 1 and 2, characterized in that the tubular insert (23) ends, at its axial end opposite the gear-box flange (14), in a cylindrical extension (32) forming an internal guide surface for the ring (10) of the rotor crown the furthest away from the gear-box.

4. Vehicle transmission according to any one of the preceding claims, characterized in that the external lateral face of the median portion (26) of the tubular insert (23) forms an internal guide surface for the ring (10) of the rotor crown the closest to the gear-box.

5. Vehicle transmission according to any one of the preceding claims, characterized in that the internal collar (24) is formed of four perforated lugs.

6. Vehicle transmission according to claim 5, characterized in that the gear-box flange (14) has the general form of a cup open towards the contiguous cardan joint (36), in that the first crown of fixing elements comprises four threaded holes (44) formed respectively in the arms of two parallel forks (42) bordering the cup and intended to receive two journals of the journal cross (43) of the cardan joint and in that the second crown of fixing elements comprises four threaded holes (49) formed in the two ends of the portions (47), of the edge of the cup, which connect the two forks together, which portions are set back axially with respect to these forks and which are hollowed radially in their median zones (53) so as to allow free movement of the cardan joint about the axis of the two above journals.

7. Vehicle transmission according to any one of the claims 1 to 4, characterized in that the gear-box flange (14) is enlarged transversely and in that the first crown of fixing elements (33) has a smaller diameter than the second (28).

8. Vehicle transmission according to claim 7, characterized in that the radial thickness of the cylindrical portion of the tubular insert (23) is substantially constant over the whole of its extent and in that this portion is reinforced on the inside by radial ribs (29) whose height decreases from the internal collar (24) to the opposite axial end.

9. Vehicle transmission according to claim 8, characterized in that the ribs (29) are located close to the fixing holes (27) formed in the internal collar (24), at the rate of two such ribs surrounding each hole.

## Patentansprüche

1. Antriebsübertragung für ein Kraftfahrzeug mit einem Getriebe (1), einer Achse, einer Welle (37) mit Doppelkardangelenk, die zwischen diesen beiden Teilen eingefügt ist und einer direkt an dem Getriebegehäuse befestigten Wirbelstrombense, die einerseits aus einem ringförmigen Statorinduktor (2), der fliegend an dem Getriebegehäuse mittels eines geeigneten Gestänges (7) befestigt ist und andererseits einem Rotor (3) besteht, der zwei Induktionsscheiben (9) aus ferromagnetischem Material enthält, die den Stator einrahmen und die beide an einem Getriebeflansch (14) abgestützt sind, der selbst fliegend an einem Wellenzapfen (19) im inneren des Gehäuses angebracht ist, wobei jede Scheibe zu diesem Zweck über einen Armkranz (11), der Lüfterflügel bildet, mit einem Ring (10) fest verbunden ist, der seinerseits an dem Getriebeflansch befestigt ist und der Getriebeflansch (14) mit zwei Kränzen von Befestigungselementen versehen ist, von denen der erste Kranz (33, 44) zur Befestigung des danebenliegenden Kardangelenkes (36) und der zweite (28, 49) zur Befestigung der Ringe (10) der Rotorkränze dient, dadurch gekennzeichnet, daß ein rohrförmiges Zwischenstück (23) vorgesehen ist, das sich in axialer Richtung vom Umfang des Getriebeflansches aus auf der entgegengesetzten Seite des Getriebes (1) erstreckt und an einem seiner axialen Enden durch einen innen liegenden Kragen (24), der durchgehend oder unterbrochen sein kann, verlängert ist, der in axialer Richtung dicht an dem Umfang der Oberfläche des Getriebeflansches anliegt, die am weitesten von dem Getriebe entfernt ist, wobei der Kragen mit einem Kranz von Befestigungsbohrungen (27) versehen ist, die mit den Elementen des zweiten Kranzes (28, 49) des Getriebeflansches zusammenwirken können, und an seinem anderen axialen Ende durch einen außen sitzenden Kragen (13) verlängert ist, der mit einem Kranz von Bohrungen (30) zur axialen Befestigung an den Kranz der oben erwähnten Ringe (10) versehen ist.

2. Antriebsübertragung für ein Kraftfahrzeug nach Anspruch 1, dadurch gekennzeichnet, daß das rohrförmige Zwischenstück (23) auf der Seite des Getriebeflansches (14) durch eine zweite zylindrische Randleiste (35) verlängert ist, die den Getriebeflansch dicht abdecken kann.

3. Antriebsübertragung für ein Kraftfahrzeug nach einem der Ansprüche 1 und 2, dadurch gekennzeichnet, daß das rohrförmige Zwischenstück (23) an seinem dem Getriebeflansch (14) entgegengesetzten axialen Ende in einer zylindrischen Verlängerung (32) endet, die ein inneres Führungslager für den Ring (10) des Rotorkranzes bildet, der am weitesten von dem Getriebe entfernt ist.

4. Antriebsübertragung nach einem der vorhergehenden Ansprüche, dadurch gekennzeichnet, daß die äußere Seitenfläche des mittleren Abschnittes (26) des rohrförmigen Zwischenstückes (23) eine innere Führungsfläche für den Ring (10) des Rotorkranzes bildet, der am nächsten an dem Getriebe sitzt.

5. Antriebsübertragung für ein Kraftfahrzeug nach einem der vorhergehenden Ansprüche, dadurch gekennzeichnet, daß der innen liegende Kragen (24) aus vier mit Bohrungen versehenen Laschen besteht.

6. Antriebsübertragung nach Anspruch 5, dadurch gekennzeichnet, daß der Getriebeflansch (14) die allgemeine Form einer zu dem benachbarten Kardangelenk (36) offenen Schale bildet, daß der erste Kranz der Befestigungselemente vier Gewindebohrungen (44) enthält, die in den Armen von zwei parallelen Gabeln (42) ausgenommen sind, die die Schale begrenzen, und dazu dienen, zwei Kreuzzapfen (43) des Kardangelenkes aufzunehmen und daß der zweite Kranz von Befestigungselementen aus vier Gewindebohrungen (49) besteht, die in den beiden Enden der Abschnitte (47) des Randes der Schale ausgenommen sind, die die beiden Gabeln miteinander verbinden, wobei die Abschnitte axial in bezug auf die Gabeln zurückspringen und in ihren mittleren Bereichen (53) radial ausgenommen sind, so daß sie Verschiebungen des Kardangelenkes um die Achse der beiden oben erwähnten Zapfen zulassen.

7. Antriebsübertragung für ein Kraftfahrzeug nach einem der Ansprüche 1 bis 4, dadurch gekennzeichnet, daß der Getriebeflansch (14) in Querrichtung vergrößert ist und daß der erste Kranz (33) der Befestigungselemente einen kleineren Durchmesser aufweist als der zweite Kranz (28).

8. Antriebsübertragung nach Anspruch 7, dadurch gekennzeichnet, daß die radiale Stärke des zylindrischen Abschnittes des rohrförmigen Zwischenstückes (23) über seine gesamte Erstreckung im wesentlichen konstant ist und daß dieser Abschnitt innen durch radiale Rippen (29) verstärkt ist, deren Höhe sich von dem inneren Kragen (24) aus bis zu dem entgegengesetzten axialen Ende verringert.

9. Antriebsübertragung nach Anspruch 8, dadurch gekennzeichnet, daß die Rippen (29) in der Nähe der Befestigungsbohrungen (27) angeordnet sind, die in dem inneren Kragen (24) ausgenommen sind, wobei je zwei derartiger Rippen jedes Loch umgeben.
